# EUROPÄISCHE PATENTSCHRIFT

(11) **EP 1 888 394 B1**
(45) Veröffentlichungstag und Bekanntmachung des Hinweises auf die Patenterteilung: **16.07.2008**
(21) Anmeldenummer: 06754861.0
(22) Anmeldetag: 26.04.2006
(51) Int. Cl.: B62D 15/02

(54) **SPURHALTEASSISTENT FÜR KRAFTFAHRZEUGE**
LANE HOLDING ASSISTANT FOR MOTOR VEHICLES
DISPOSITIF D'ASSISTANCE AU MAINTIEN DE LA TRAJECTOIRE DE VEHICULES AUTOMOBILES

(30) Priorität: 27.05.2005 DE 102005024382
(43) Veröffentlichungstag der Anmeldung: 20.02.2008
(73) Patentinhaber: ROBERT BOSCH GMBH, 70442 Stuttgart (DE)
(72) Erfinder: SCHERL, Michael, 74321 Bietigheim (DE); WEILKES, Michael, 74343 Sachsenheim (DE); BUERKLE, Lutz, 71229 Leonberg (DE); RENTSCHLER, Tobias, 75180 Pforzheim (DE)
(86) Internationale Anmeldenummer: PCT/EP2006/061840
(87) Internationale Veröffentlichungsnummer: WO 2006/125709

(56) Entgegenhaltungen:
- EP-A- 1 495 941
- DE-A1- 10 012 737
- DE-A1- 10 210 723

## Beschreibung

### Stand der Technik

Die Erfindung betrifft einen Spurhalteassistenten für Kraftfahrzeuge, mit einer Sensoreinrichtung zur Erkennung der Fahrspuren auf der Fahrbahn, einer Steuereinrichtung, die über ein Stellglied Kräfte auf die Lenkung des Fahrzeugs ausübt, um das Fahrzeug in der Spur zu halten, und einer Einrichtung zur Erkennung einer Spurwechselabsicht des Fahrers.

Ein solcher Spurwechselassistent ist z. B. aus DE 102 10 723 oder DE 101 14 470 bekannt. Als Sensoreinrichtung ist ein Videosystem vorgesehen, mit dem die Fahrspurmarkierungen auf der Fahrbahn und damit die Querposition des eigenen Fahrzeugs relativ zur aktuell befahrenen Fahrspur, im folgenden als "eigene Fahrspur" bezeichnet, erkannt werden können. Wenn die Querposition des Fahrzeugs um mehr als eine bestimmte Toleranzgrenze zur einen oder anderen Seite von der Spurmitte abweicht, erfolgt automatisch ein Regeleingriff in die Lenkung, um das Fahrzeug wieder annähernd auf die Spurmitte zurückzuführen. Hierdurch wird der Fahrkomfort für den Fahrer erheblich gesteigert und auch die Verkehrssicherheit erhöht, da der Fahrer sich ganz auf das Verkehrsgeschehen konzentrieren kann.

Wenn der Fahrer jedoch absichtlich einen Spurwechsel vornehmen will, etwa um einen Überholvorgang einzuleiten, muß er bei aktiver Spurhaltefunktion größere Kräfte auf das Lenkrad ausüben, um die durch den Regeleingriff des Spurhalteassistenten verursachten Kräfte zu überwinden. Aus dem Grund ist bei dem bekannten System vorgesehen, daß, wenn eine Spurwechselabsicht des Fahrers erkannt wird, beispielsweise anhand der Betätigung des Fahrtrichtungsanzeigers (Blinkers), die Spurhaltefunktion zumindest zeitweise deaktiviert wird.

### Vorteile der Erfindung

Die Erfindung mit denen in Anspruch 1 angegebenen Merkmalen bietet den Vorteil, daß der Komfort und die Sicherheit bei einem absichtlichen Spurwechsel weiter verbessert werden.

Erfindungsgemäß wird bei einer erkannten Spurwechselabsicht der Spurhalteassistent nicht vollständig deaktiviert, sondern statt dessen wird die auf die Lenkung ausgeübte Kraft, genauer, die Abhängigkeit dieser Kraft von der Querposition des Fahrzeugs, derart asymmmetrisch modifiziert, daß der Spurwechsel in Richtung auf die erkannte Zielspur erleichtert wird, während bei Abweichungen von der Spurmitte in der entgegengesetzten Richtung nach wie vor ein korrigierender Regeleingriff erfolgt. Dazu ist es erforderlich, daß nicht nur die Spurwechselabsicht als solche, sondern auch die Richtung des Spurwechsels erkannt wird. Diese Voraussetzung ist jedoch bei Erkennung des Spurwechsels, beispielsweise anhand des Zustands des Fahrrichtungsanzeigers, ohnehin erfüllt.

Der besondere Vorteil der vorgeschlagenen Lösung besteht darin, daß die Gefahr verringert wird, daß der Fahrer bei der Vorbereitung des Spurwechsels zu weit in der entgegengesetzten Richtung von der eigenen Spur abkommt. Wenn der Fahrer beispielsweise einen Wechsel auf die Überholspur beabsichtigt, in Ländern mit Rechtsverkehr also auf die linke Spur, muß er bei hoher Verkehrsdichte sein Augenmerk vor allem auf den rückwärtigen Verkehr auf der Zielspur richten, etwa durch Beobachtung des Rückspiegels oder indem er sich umwendet, um Fahrzeuge im toten Winkel zu erfassen, bis der richtige Zeitpunkt für das Einfädeln in den Verkehr auf der Nebenspur gekommen ist. Dabei besteht, insbesondere beim Einfahren in eine Linkskurve, die Gefahr, daß er zu weit nach rechts abdriftet. Dies wird durch die Erfindung wirksam verhindert.

Vorteilhafte Weiterbildungen und Ausgestaltungen der Erfindung ergeben sich aus den Unteransprüchen.

In einer vorteilhaften Ausführungsform wird der Zusammenhang zwischen der vom Spurhalteassistenten auf die Lenkung ausgeübten Kraft und der Querposition des Fahrzeugs so modifiziert, daß gegen Ende des Spurwechselvorgangs ein korrigierender Regeleingriff auch dann erfolgt, wenn der Fahrer über die Solltrajektorie auf der Zielspur, z.B. die Mitte der Zielspur, hinausschießt. Gemäß einer Weiterbildung ist es auch denkbar, daß der Spurwechselassistent den eigentlichen Spurwechselvorgang aktiv unterstützt, z.B. sobald anhand der Lenkbewegungen des Fahrers oder durch Quittierung einer vom System ausgegebenen Spurwechselempfehlung erkannt wird, daß der Fahrer den Spurwechsel tatsächlich einleiten will.

Wenn das Fahrzeug nicht nur mit einem Spurhalteassistenten, sondern zusätzlich auch mit einem Abstandsregelsystem (ACC, Adaptive Cruise Control) ausgerüstet ist, beispielsweise auf der Basis eines Abstandsradars, kann die Erkennung der Spurwechselabsicht nicht nur anhand des Zustands des Fahrtrichtungsanzeigers sondern wahlweise oder zusätzlich auch anhand der vom Abstandsradar erkannten Verkehrssituation erfolgen. Beispielsweise kann beim Auffahren auf ein vorausfahrendes langsameres Fahrzeug auf der eigenen Spur eine Überholabsicht und damit ein bevorstehender Wechsel auf die Überholspur unterstellt werden. Umgekehrt kann die Absicht zu einem Spurwechsel nach rechts unterstellt werden, wenn das Radarsystem erkennt, daß die rechte Nebenspur frei ist. Der Spurwechsel sollte allerdings immer eine Interaktion des Fahrers eingeleitet werden, z.B. durch Betätigung einer Taste, einen Sprachbefehl oder dergleichen. Es wurden auch bereits Systeme vorgeschlagen, bei denen beispielsweise mit Hilfe eines Radarsystems auch der rückwärtige Verkehr überwacht wird und dem Fahrer je nach Verkehrssituation eine Empfehlung für einen Spurwechsel gegeben wird. In diesem Fall kann bei Ausgabe der Spurwechselempfehlung auch eine Spurwechselabsicht unterstellt und die Spurhaltefunktion entsprechend angepaßt werden, z.B. indem das System den Spurwechsel nur dann freigibt (durch Absenken der Kraftkennlinie), wenn es der rückwärtige Verkehr erlaubt.

### Zeichnung

Ein Ausführungsbeispiel der Erfindung ist in den Zeichnungen dargestellt und in der nachfolgenden Beschreibung näher erläutert.

### Es zeigen:

- Figur 1: ein Blockdigramm des erfindungsgemäßen Spurhalteassistenten; und
- Figur 2: ein Diagramm zur Erläuterung der Funktionsweise des Spurhalteassistenten

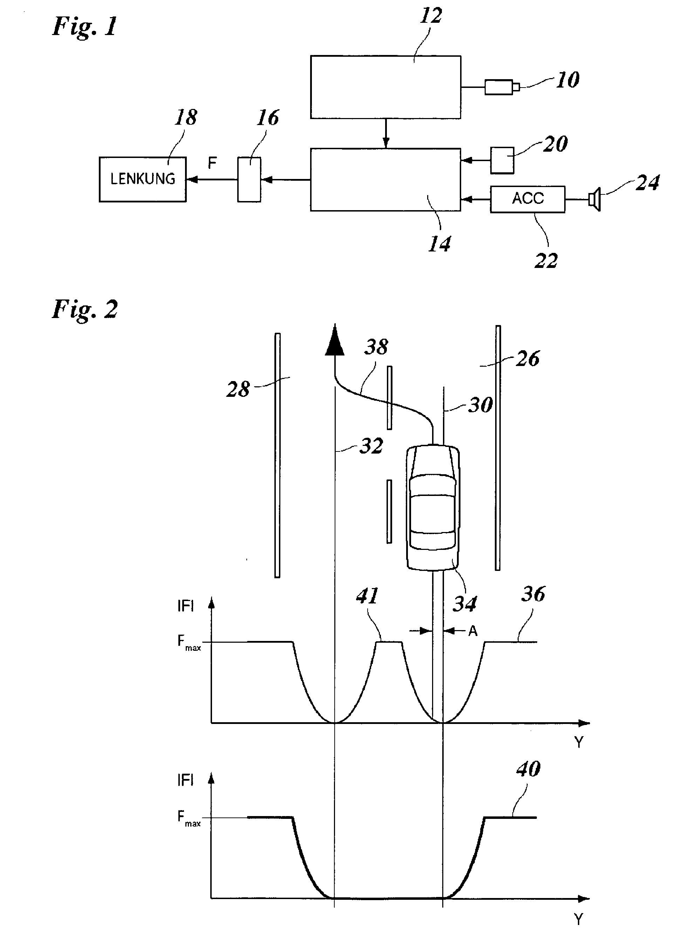

Der in Figur 1 gezeigte Spurhalteassistent weist als Sensoreinrichtung zur Erkennung der Fahrspuren der Fahrbahn eine Videokamera 10 und eine zugehörige Auswerteelektronik 12 auf. Eine Steuereinrichtung 14 bestimmt anhand der Daten der Sensoreinrichtung den Fahrspurverlauf, die Fahrzeugorientierung in der Fahrspur und die Querposition Y des Fahrzeugs relativ zur Spurmitte der eigenen Fahrspur und berechnet in Abhängigkeit von diesen Größen eine Kraft, mit der über ein Stellglied 16 auf die Lenkung 18 des Fahrzeugs eingewirkt wird, um das Fahrzeug annähernd auf der Spurmitte zu halten oder wieder auf die Spurmitte zurückzuführen. Die Auswerteelektronik 12 und die Steuereinrichtung 14 können beispielsweise durch ein elektronisches Datenverarbeitungssystem mit einem oder mehreren Mikroprozessoren und zugehörige Software gebildet werden. Ein Sensor 20 erfaßt den Zustand des Fahrtrichtungsanzeigers des Fahrzeugs und bildet so eine Einrichtung, mit der eine Spurwechselabsicht des Fahrers sowie die Richtung des Spurwechsels erkannt werden können.

In gezeigten Beispiel ist das Fahrzeug zusätzlich mit einem Abstandsregelsystem (ACC) 22 ausgerüstet, zu dem auch ein Ortungssystem 24, beispielsweise ein Radarsensor, zur Ortung von Fahrzeugen im Vorfeld des eigenen Fahrzeugs sowie zur Messung der Abstände und Relativgeschwindigkeiten dieser Fahrzeuge gehört. Eine Überholabsicht des Fahrers kann somit wahlweise auch anhand der vom ACC-System erkannten Verkehrssituation festgestellt werden. Beispielsweise wird eine Spurwechselabsicht nur dann erkannt, wenn die Verkehrssituation einen Spurwechsel in der einen oder anderen Richtung nahelegt und außerdem der Fahrtrichtungsanzeiger für diese Richtung aktiviert ist. Auch wenn kein ACC-System vorhanden ist, kann mit Hilfe der Videokamera 10 erkannt werden, auf welcher Spur sich das eigene Fahrzeug befindet. Wenn der Sensor 20 erkennt, daß beispielsweise der linke Blinker gesetzt ist, so wird dies nur dann als Spurwechselabsicht interpretiert, wenn sich das Fahrzeug nicht bereits auf der äußersten linken Spur befindet.

Die Funktionsweise der Steuereinrichtung 14 wird nun unter Bezugnahme auf Figur 2 näher erläutert. Im oberen Teil dieser Figur ist skizzenhaft eine Fahrbahn mit zwei Fahrspuren 26, 28 gezeigt. Die annähernd auf der Spurmitte verlaufenden Solltrajektorien sind jeweils durch eine Linie 30 bzw. 32 markiert. Ein Fahrzeug 34, das mit dem Spurhalteassistenten nach Figur 1 ausgerüstet ist, fährt auf der rechten Spur 26.

Solange keine Spurwechselabsicht des Fahrers erkannt ist, ist der Betrag der von der Steuereinrichtung 14 berechneten und über das Stellglied 16 auf die Lenkung 18 ausgeübten Kraft F in Abhängigkeit von der Querposition Y des Fahrzeugs 34 durch die Kurve 36 in Figur 2 gegeben. In der Praxis hängt diese Kraft von Abweichung A des Fahrzeugs von der Solltrajektorie ab. In diese Abweichung fließen auch die Fahrbahnkrümmung und die Fahrzeugorientierung ein, was jedoch der Übersichtlichkeit halber in Fig. 2 nicht dargestellt ist. Der Teil der Kurve 36, der der rechten (eigenen) Fahrspur 26 entspricht, ist symmetrisch zu einer Solltrajektorie 30, die beispielsweise durch die Spurmitte oder einen bestimmten Sollversatz zur Spurmitte gegeben ist. Wenn das Fahrzeug auf der Solltrajektorie fährt, erfolgt kein Lenkeingriff durch das Stellglied 16, und wenn die Querposition des Fahrzeugs in der einen oder anderen Richtung von der Solltrajektorie abweicht (Abweichung A), nimmt die vom Stellglied 16 ausgeübte Kraft F progressiv bis zu einem bestimmten Maximalwert zu. Die Kraftrichtung ist dabei stets so, daß das Fahrzeug wieder auf die Solltrajektorie zurückgeführt wird. Entsprechendes gilt für den linken Teil der Kurve 36, die der linken Fahrspur 28 entspricht und die Spurhaltefunktion für eine Fahrt auf der linken Spur repräsentiert. Auf Fahrbahnen mit drei Spuren arbeitet das System analog.

In der Praxis kann die Kurve 36 in Abhängigkeit von der Fahrgeschwindigkeit des Fahrzeugs 34 skaliert werden, so daß die Stärke des Lenkeingriffs von der jeweiligen Fahrgeschwindigkeit abhängig ist.

Ein Pfeil 38 im oberen Teil der Figur 2 symbolisiert einen Spurwechsel des Fahrzeugs 34 von der rechten Fahrspur 26 (eigene Spur) auf die linke Fahrspur 28, die dann die Zielspur ist.

Wenn die Absicht des Fahrers zu einem solchen Spurwechsel erkannt wird, so wird die Kurve 36 vorübergehend durch die im unteren Teil der Figur 2 gezeigte Kurve 40 ersetzt. Diese Kurve ist asymmetrisch in bezug auf die durch die Linie 30 repräsentierte Solltrajektorie auf der eigenen Spur 26. Bei Abweichungen nach links erfolgt in diesem Fall kein Lenkeingriff durch das Stellglied 16, so daß der Fahrer beim Lenken auf die Zielspur keine Gegenkraft des Stellglieds 16 zu überwinden braucht. Der Ast der Kurve 40 rechts von der Solltrajektorie ist dagegen identisch mit dem entsprechenden Ast der Kurve 36, so daß bei Abweichungen von der Solltrajektorie nach rechts die Spurhaltefunktion wirksam bleibt.

Im gezeigten Beispiel hat die Kurve 40 links von der durch die Linie 32 repräsentierten Solltrajektorie auf der Zielspur 28 wieder einen ansteigenden Ast, der mit dem entsprechenden Ast der Kurve 36 identisch ist. Sobald das Fahrzeug 34 gegen Ende des Spurwechselvorgangs die Solltrajektorie der Zielspur 28 erreicht, setzt deshalb die Spurhaltefunktion für Abweichungen nach links allmählich wieder ein, so daß ein etwaiges Überschießen über die Solltrajektorie hinaus gemildert wird.

Das Erreichen oder Überschreiten der Linie 32 (oder das Erreichen einer y-Position kurz vor dieser Linie) kann zugleich ein Signal dafür bilden, daß der Spurwechselvorgang abgeschossen ist. Bevorzugt wird der Spurwechselvorgang jedoch dann als abgeschlossen betrachtet, wenn nach dem Abschalten des Blinkers ein vorbestimmtes Zeitintervall vergangen ist. Bei Abschluß des Spurwechselvorgangs kehrt die Steuereinrichtung 14 wieder zu der Kurve 36 zurück, so daß nun eine automatische Spurhaltung auf die Solltrajektorie 32 der linken Fahrspur 28 erfolgt. Der Übergang von der Kurve 40 zu der Kurve 36 kann zweckmäßig in der Weise erfolgen, daß der rechte Ast der Kurve 40 allmählich (stetig) nach links verschoben wird oder das "Mittelstück" 41 der Kurve in Fig.2 allmählich von 0 auf Fₘₐₓ erhöht wird. Auf diese Weise wird verhindert, daß der Fahrer beim Wiedereinsetzen der symmetrischen Spurhaltefunktion eine abrupte Kraftänderung am Lenkrad spürt.

Alternativ könnte der rechte Ast der Kurve 40 auch bereits während des Spurwechselvorgangs allmählich der Fahrzeugbewegung nachgeführt werden. Die hier beschriebene Variante, bei der die Kurve 40 in ihrer Form erhalten bleibt, bis das Fahrzeug 34 die Zielspur erreicht hat, hat jedoch den Vorteil, daß der Fahrer keine Gegenkraft zu überwinden braucht, falls er verkehrsbedingt dazu gezwungen ist, den Spurwechselvorgang abzubrechen.

Die oben beschriebene Arbeitsweise der Steuereinrichtung 14 gilt analog für den Fall eines Spurwechsels von der linken Spur auf die rechte Spur.

## Patentansprüche

1. Spurhalteassistent für Kraftfahrzeuge, mit einer Sensoreinrichtung (10, 12) zur Erkennung der Fahrspuren (26, 28) auf der Fahrbahn, einer Steuereinrichtung (14), die über ein Stellglied (16) eine Kraft (F) auf die Lenkung (18) des Fahrzeugs (34) ausübt, um das Fahrzeug in der Spur zu halten, und einer Einrichtung (20, 22, 24) zur Erkennung einer Spurwechselabsicht des Fahrers, **dadurch gekennzeichnet, daß** die Steuereinrichtung (14) dazu ausgebildet ist, bei erkannter Spurwechselabsicht die auf die Lenkung ausgeübte Kraft (F) asymmetrisch im Sinne eines leichteren Spurwechsels zu modifizieren.

2. Spurhalteassistent nach Anspruch 1, **dadurch gekennzeichnet, daß** bei erkannter Spurwechselabsicht von der eigenen Spur (26) auf eine Zielspur (28) der Betrag der auf die Lenkung ausgeübten Kraft (F) so von der Abweichung (A) des Fahrzeugs (34) von einer Solltrajektorie (30, 32) abhängig ist, daß die Kraft für Querpositionen zwischen der Solltrajektorie (30) auf der eigenen Spur (26) und der Solltrajektorie (32) auf der Zielspur (28) verringert oder gleich null ist, jenseits der Solltrajektorie (32) der Zielspur (28) jedoch wieder zunimmt.

3. Spurhalteassistent nach Anspruch 2, **dadurch gekennzeichnet, daß** die Abhängigkeit zwischen dem Betrag der Kraft (F) und der Abweichung (A) jenseits der Solltrajektorie der Zielspur (28) der gleiche ist wie bei einer Spurhaltefunktion auf der Zielspur (28) ohne Spurwechselabsicht.

4. Spurhalteassistent nach Anspruch 2 oder 3, **dadurch gekennzeichnet, daß** die Steuereinrichtung (14) dazu ausgebildet ist, den bei erkannter Spurwechselabsicht geltenden Zusammenhang zwischen der Kraft (F) und der Abweichung (A) des Fahrzeugs bis zum Vollzug des Spurwechsels (28) beizubehalten.

5. Spurhalteassistent nach einem der vorstehenden Ansprüche, **dadurch gekennzeichnet, daß** die Steuereinrichtung (14) dazu ausgebildet ist, bei Abschluß des Spurwechselvorgangs durch stetige Änderung der Beziehung, die die Abhängigkeit der Kraft (F) von der Abweichung (A) angibt, zur regulären, nicht modifizierten Spurhaltefunktion zurückzukehren.

## Claims

1. Lane-keeping assistant for motor vehicles, comprising a sensor device (10, 12) for identifying the lanes (26, 28) on the carriageway, a control device (14) which exerts a force (F) on the steering system (18) of the vehicle (34) by means of an actuator (16) in order to keep the vehicle in lane, and a device (20, 22, 24) for identifying an intention of the driver to change lanes, **characterized in that** the control device (14) is designed to modify the force (F) exerted on the steering system asymmetrically for the purpose of easier lane changing when the intention to change lanes is identified.

2. Lane-keeping assistant according to Claim 1,
**characterized in that**, when an intention to change from the current lane (26) to a target lane (28) is identified, the magnitude of the force (F) exerted on the steering system is dependent on the deviation (A) of the vehicle (34) from a desired trajectory (30, 32) such that the force for lateral positioning between the desired trajectory (30) on the current lane (26) and the desired trajectory (32) on the target lane (28) is reduced or equal to zero, but increases again on the other side of the desired trajectory (32) of the target lane (28).

3. Lane-keeping assistant according to Claim 2,
**characterized in that** the dependence between the magnitude of the force (F) and the deviation (A) on the other side of the desired trajectory of the target lane (28) is the same as in the case of a lane-keeping function on the target lane (28) when there is no intention to change lanes.

4. Lane-keeping assistant according to Claim 2 or 3, **characterized in that** the control device (14) is designed to maintain the relationship between the force (F) and the deviation (A) of the vehicle which applies when an intention to change lanes is identified, until the lane change (38) is executed.

5. Lane-keeping assistant according to one of the preceding claims, **characterized in that** the control device (14) is designed to return to regular, unmodified lane-keeping operation when the lane-changing process is complete by continuously changing the relationship which specifies the dependence of the force (F) on the deviation (A).

## Revendications

1. Dispositif d'assistance au maintien de la trajectoire de véhicules automobiles, comportant une installation de capteurs (10, 12) pour détecter les voies de circulation (26, 28) sur la chaussée, une installation de commande (14) exerçant une force (F) suivant la direction (18) du véhicule (34) par l'intermédiaire d'un organe d'actionnement (16), pour maintenir le véhicule sur sa trajectoire ainsi qu'une installation (20, 22, 24) pour détecter l'intention du conducteur de changer de voie de circulation,
**caractérisé en ce que**
l'installation de commande (14) est réalisée pour qu'en cas de détection d'intention de changement de voie de circulation elle modifie la force (F) exercée sur la direction, de manière asymétrique dans le sens facilitant le changement de voie de circulation.

2. Dispositif d'assistance de maintien de la trajectoire selon la revendication 1,
**caractérisé en ce qu'**
en cas de détection d'une intention de changement de voie de circulation pour passer de la propre voie (26) vers une voie de destination (28), l'intensité de la force (F) exercée sur la direction dépend de l'écart (A) du véhicule (34) par rapport à une trajectoire de consigne (30, 32), de façon que la force pour les positions transversales entre la trajectoire de consigne (30) sur la propre voie (26) et la trajectoire de consigne (32) sur la voie de destination (28) soit réduite ou soit voisine de zéro, et augmente toutefois de nouveau de l'autre côté de la trajectoire de consigne (32) de la voie cible (28).

3. Dispositif d'assistance de maintien de la trajectoire selon la revendication 2,
**caractérisé en ce que**
la relation entre l'amplitude de la force (F) et la déviation (A) de l'autre côté de la trajectoire de consigne de la trajectoire cible (28) est la même que celle d'une fonction de maintien de trajectoire sur la voie cible (28) sans intention de changer de voie.

4. Dispositif d'assistance de maintien de la trajectoire selon la revendication 2 ou 3,
**caractérisé en ce que**
l'installation de commande (14) est réalisée pour qu'en cas de détection d'une intention de changement de voie, la relation valable entre la force (F) et la déviation (A) du véhicule soit respectée jusqu'à ce que le changement de voie (28) soit totalement exécuté.

5. Dispositif d'assistance de maintien de la trajectoire selon l'une des revendications précédentes,
**caractérisé en ce que**
l'installation de commande (14) est réalisée pour qu'à la fin de l'opération de changement de voie, une variation continue de la relation traduisant la dépendance entre la force (F) et la déviation (A) retourne à la fonction régulière non modifiée de maintien de la voie de circulation.
